# EUROPEAN PATENT APPLICATION

(11) **EP 4 841 041 A1**
(43) Date of publication of application: **18.11.2026**
(21) Application number: 26178479.7
(22) Date of filing: 13.05.2026
(51) Int. Cl.: E04B 2/78

(54) **PARTITION WALL ASSEMBLY**

(30) Priority: 14.05.2025 US 202519207779
(71) Applicant: Tate Access Floors, Inc., Columbia, Maryland 21046 (US)
(72) Inventor: LUTTRELL, Conor, Athy (IE); DORRIAN, Jack, Youghal (IE); HOSTETTER, Dustin, Annville (US); BURCH, Brent, Ellicott City (US)
(74) Representative: Whitfield, Gillian Janette

(57) **Abstract**

A partition wall assembly including at least two panels, a top runner, a bottom cover for the top runner, at least two mullions that are spaced and parallel, at least two front caps, at least two top brackets and at least two bottom brackets. Each mullion has a top end and a bottom end. The top end of each of the mullions is attached to one of the top brackets. Each top bracket and the bottom cover is attached to the top runner. The top edge portion of the panels of the first set of panels is directly engaged and retained by and between the top runner and the bottom cover for the top runner. Each one of the front caps is attached to a separate one of the mullions.

## Description

This invention relates to partition walls for dividing interior spaces of buildings into different working areas. More particularly, this invention relates to such partition walls that have at least two panels, mullion assemblies that retain side edges of panels of the partition walls and a top runner assembly that retains top edges of the panels of the partition walls.

### BACKGROUND OF THE INVENTION

Partition walls have long been used to divide an interior space of a building into separate areas for, *e.g.,* different purposes or functions. For example, a partition wall can divide an interior space of a building into a clean room area and a mechanical apparatus area.

Such partition walls commonly consist of one or more partition wall assemblies comprised of panels arranged edge-to-edge, spaced and parallel mullion assemblies that support the vertical edges of the panels and a top runner assembly that supports the top edges of the panels. The panels of these partition wall assemblies are usually comprised of a material that is more durable and easier to maintain than walls made of gypsum products or dry wall.

While various of those partition wall assemblies are known in the industry, there is always a need for a partition wall assembly that is easier to maneuver and assemble, requires fewer tools to assemble and install, can be assembled and installed more quickly and is very durable and structurally sound.

This invention addresses that need in the industry, as well as other needs that will be apparent to those of skill in this industry given this disclosure of the invention.

### SUMMARY OF THE INVENTION

The partition wall assemblies of some embodiments of this invention include a first set of panels having at least two panels, a top runner, a bottom cover for the top runner, at least two mullions that are spaced and parallel, at least two front caps, at least two top brackets and at least two bottom brackets. Each panel of the first set of panels may include a top edge portion, a bottom edge portion and two side edge portions. Each mullion may have a top end and a bottom end. The top end of each of the mullions may be attached to one of the top brackets. Each top bracket and the bottom cover may be attached to the top runner. The top edge portion of the panels of the first set of panels may be directly engaged and retained by and between the top runner and the bottom cover for the top runner. Each one of the front caps may be attached to a separate one of the mullions. Each side edge portion of the panels of the first set of panels may be retained by and between one of the mullions and one of the front caps. The bottom end of all of the mullions may be connected to separate ones of the bottom brackets. The top runner and bottom cover may be perpendicular to the mullions and the front caps.

In some embodiments of this invention, the top runner may have first and second outermost side walls extending in parallel in a same direction from a base wall of the top runner and an interior wall that extends in the same direction from the base wall, is parallel to the first and second outermost side walls and between the first and second outermost side walls along the base wall. The bottom cover for the top runner may be directly connected to the first outermost side wall and the interior wall by a snap fit. The upper edge portion of each panel of the first set of panels may be directly engaged and retained by the second outermost side wall and the bottom cover for the top runner. The top brackets may be between the first outermost wall and the interior wall.

In other embodiments of this invention, the bottom cover may have two spaced and parallel side walls.

The first outermost side wall and the interior wall may have bulges that engage notches in the two spaced and parallel side walls of the bottom cover.

In yet other embodiments of this invention, each of the mullions may have a first set of flanges extending in parallel from an exterior surface of the mullion. Each front cap may include a second set of flanges extending in parallel from a surface of the front cap. The second set of flanges may be received in and engage the first set of flanges.

In further embodiments of this invention, the partition wall assembly may include a transom and a transom front cap that are perpendicular to the mullions and the front caps and a second set of at least two panels having edge portions. The transom front cap may be attached to the transom. The edge portions of the second set of at least two panels may be engaged by and received between the transom and the transom front cap. The transom and transom front cap may be between the top end and the bottom end of two of the mullions.

### BRIEF DESCRIPTION OF THE DRAWINGS

Figure 1 is a front view of one embodiment of a partition wall assembly of this invention.
Figure 2 is an exploded, front perspective view of the embodiment of a partition wall assembly of this invention illustrated in Figure 1.
Figure 3 is a side view of the embodiment of a partition wall assembly illustrated in Figures 1 and 2.
Figure 4 is an end view of the top runner of the embodiment of a partition wall assembly of this invention illustrated in Figures 1-3.
Figure 4A is a bottom view of the top runner illustrated in Figure 4.
Figure 5 is a top perspective view of a top bracket of the embodiment of a partition wall assembly of this invention illustrated in Figures 1-3.
Figure 6 is an end view of the top bracket illustrated in Figure 5.
Figure 7 is a top view of the top bracket illustrated in Figures 5 and 6.
Figure 8 is an end view of a bottom cover for the top runner of the embodiment of a partition wall assembly of this invention illustrated in Figures 1-3.
Figure 9 is an end view of a mullion of the embodiment of a partition wall assembly of this invention illustrated in Figures 1-3.
Figure 10 is an end view of a front cap of the embodiment of a partition wall assembly of this invention illustrated in Figures 1-3.
Figure 11 is a top perspective view of a base bracket of the embodiment of a partition wall assembly of this invention illustrated in Figures 1-3.
Figure 12 is an end view of the base bracket illustrated in Figure 11.
Figure 13 is an end view of a U-channel of the embodiment of a partition wall assembly of this invention illustrated in Figures 1-3.
Figure 14 is an end view of the transom of the embodiment of a partition wall assembly of this invention illustrated in Figures 1-3.
Figure 15 is an end view of the transom back cap of the embodiment of a partition wall assembly of this invention illustrated in Figures 1-3.
Figure 16 is a top perspective view of a transom cleat of the embodiment of a partition wall assembly of this invention illustrated in Figures 1-3.
Figure 17 is an end view of the transom cleat illustrated in Figure 16.
Figure 18 is a bottom perspective view illustrating the assembly of the top bracket illustrated in Figures 5-7 and the top runner illustrated in Figure 4.
Figure 19 is an end view illustrating the assembling of a panel, the top bracket illustrated in Figures 5-7, the top runner illustrated in Figure 4 and the bottom cover for the top runner illustrated in Figure 8.
Figure 20 is an end view of the final assembly of a panel, the top bracket illustrated in Figures 5-7, the top runner illustrated in Figure 4 and the bottom cover for the top runner illustrated in Figure 8.
Figure 21 is an end view illustrating the assembling of the top bracket illustrated in Figures 5-7, the mullion illustrated in Figure 9 and the base bracket illustrated in Figures 11 and 12.
Figure 22 is an end view of the final assembly of the top bracket illustrated in Figures 5-7, the mullion illustrated in Figure 9 and the base bracket illustrated in Figures 11 and 12.
Figure 23 is a cross section view of the final assembly of the top bracket illustrated in Figures 5-7, the mullion illustrated in Figure 9 and the base bracket illustrated in Figures 11 and 12, along line 23-23 of Figure 22.
Figure 24 is a cross section view of the final assembly of the top bracket illustrated in Figures 5-7, the mullion illustrated in Figure 9 and the base bracket illustrated in Figures 11 and 12, along line 24-24 of Figure 22.
Figure 25 is an exploded view of the assembly of the mullion illustrated in Figure 9, the front cap illustrated in Figure 10 and two panels.
Figure 26 is a top view of the final assembly of the mullion illustrated in Figure 9, the front cap illustrated in Figure 10 and two panels.
Figure 27 is an end view of the assembly of the U-channel illustrated in Figure 13 to an edge of a panel.
Figure 28 is an exploded, perspective view of the assembly of the transom illustrated in Figure 14, the transom back cap illustrated in Figure 15, two of the transom cleat illustrated in Figures 16 and 17, the front cap illustrated in Figure 10 and two panels.
Figure 29 is an exploded, side view of the assembly of the transom illustrated in Figure 14, the transom back cap illustrated in Figure 15, the transom cleat illustrated in Figures 16 and 17, the front cap illustrated in Figure 10 and two panels, which assembly is also illustrated in Figure 28.
Figure 30 is a side view of the assembly of the transom illustrated in Figure 14, the transom back cap illustrated in Figure 15, the transom cleat illustrated in Figures 16 and 17, the front cap illustrated in Figure 10 and two panels, which assembly is also illustrated in Figures 28 and 29.
Figures 31 and 32 are side views illustrating the assembly of the transom illustrated in Figure 14 and the transom cleat illustrated in Figures 16 and 17.

### DETAILED DESCRIPTION OF EMBODIMENTS

As stated, one embodiment of a partition wall assembly of this invention, partition wall assembly 21, is illustrated in the figures.

In this embodiment of the invention, partition wall assembly 21 includes panels 23A, 23B, 23C, 25A and 25B, top runner 27, top brackets 29A-29E, bottom covers 31A-31D, mullions 33A-33E, front caps 35A-35F, base brackets 37A-37E, U-channels 39A-39D, transom 41, transom back cap 43, transom cleats 45A and 45B and bolts 47.

Panels 23A, 23B and 23C are the same, and panels 25A and 25B are the same. While, in this embodiment of the invention, panels 23A, 23B, 23C, 25A and 25B are comprised of 16mm thick PolyCM, in other embodiments of the invention, panels of other thicknesses and/or material can be used as long as the panels perform the desired insulation and other functions.

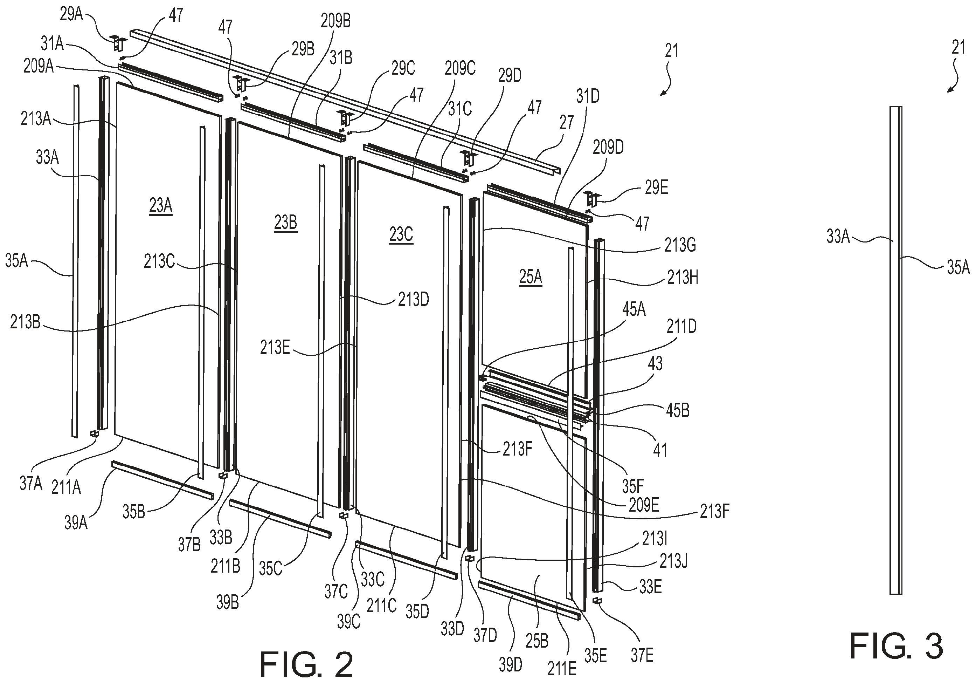

Each of panels 23A, 23B, 23C, 25A and 25B includes a top edge, a bottom edge and two side edges. Specifically, panel 23A includes top edge 209A, bottom edge 211A and side edges 213A and 213B, panel 23B includes top edge 209B, bottom edge 211B and side edges 213C and 213D, panel 23C includes top edge 209C, bottom edge 211C and side edges 213E and 213F, panel 25A includes top edge 209D, bottom edge 211D and side edges 213G and 213H and panel 25B includes top edge 209E, bottom edge 211E and side edges 213I and 213J, as illustrated, *e.g.,* in Figure 2. The portions of panels 23A-23C, 25A and 25B that include those edges are referred to herein as "edge portions." For example, panel 23A has a top edge portion that includes top edge 209A, a bottom edge portion that includes bottom edge 211B and two side edge portions that include side edges 213A and 213B.

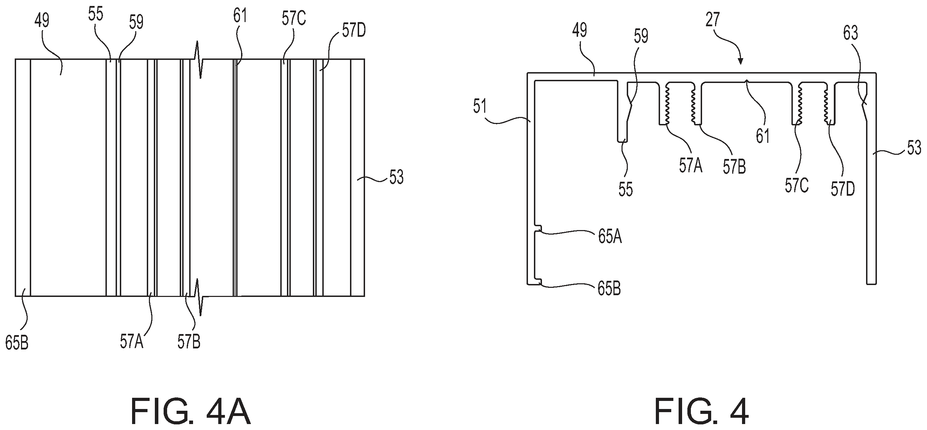

Top runner 27 is illustrated, *e.g.,* in Figures 4 and 4A. Top runner 27 includes base wall 49, side walls 51 and 53, interior flange 55 and threaded interior walls 57A and 57B, all of which extend the length of top runner 27.

As shown in Figure 4, side walls 51 and 53 extend in the same direction from the opposite ends of base wall 49, in parallel to each other and perpendicular to base wall 49. Likewise, interior flange 55 and threaded interior walls 57A-57D extend from base wall 49 in the same direction as side walls 51 and 53, perpendicular to base wall 49 and parallel to side walls 51 and 53 and each other.

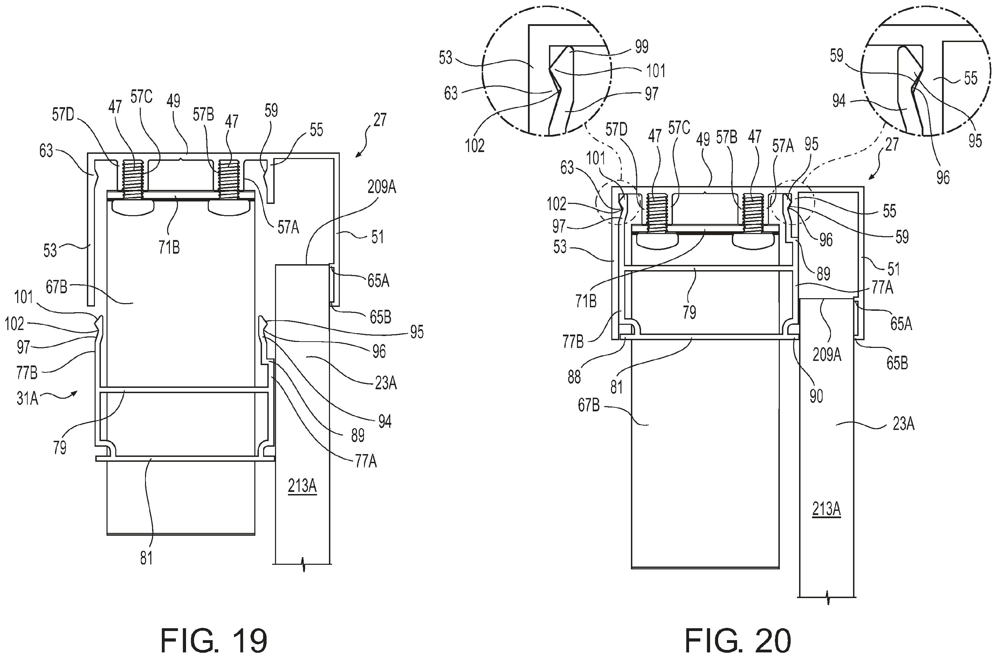

Side wall 51 has nubs 65A and 65B that protrude inwardly and extend the length of top runner 27. The function of nubs 65A and 65B is to engage side surfaces of panels, to retain the panels between top runner 27 and bottom covers 31A-31D, as illustrated in Figures 19 and 20 and explained below.

Interior flange 55 has raised surface 59 that protrudes toward threaded wall 57A and extends the length of top runner 27. The function of raised surface 59 is to engage a notch of a side wall of bottom covers 31A-31D, to affix top runner 27 and bottom covers 31A-31D, as illustrated in Figure 20 and explained below.

Side wall 53 has raised surface 63 that protrudes toward threaded wall 57D and extend the length of top runner 27. The function of raised surface 63 is to engage a notch of another side wall of bottom covers 31A-31D, to affix top runner 27 and bottom covers 31A-31D, as also illustrated in Figure 20 and explained below.

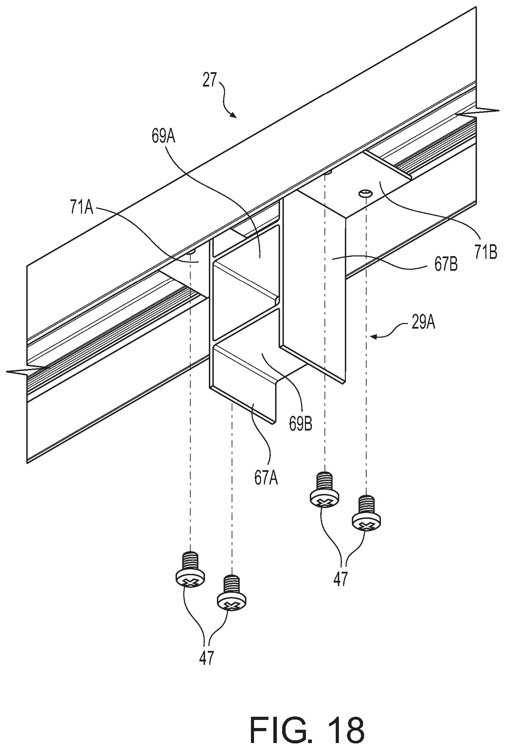

Threaded interior walls 57A and 57B have threaded surfaces that face each other. Likewise, threaded interior walls 57C and 57D have threaded surfaces that face each other. The function of the threaded surfaces of threaded interior walls 57A-57D is to engage and retain bolts that affix top brackets 29A-29E to top runner 27, as illustrated in Figures 18-20 and explained below.

Base wall 49 includes score line 61 that extends the length of base wall 49. Score line 61 functions as guidance to an installer who is installing partition wall assembly 21 in a given room or building area. Specifically, the installer can drill holes in base wall 49 along score line 61, as desired, to receive fasteners that fasten base wall 49 to the ceiling profile of the given room or building area.

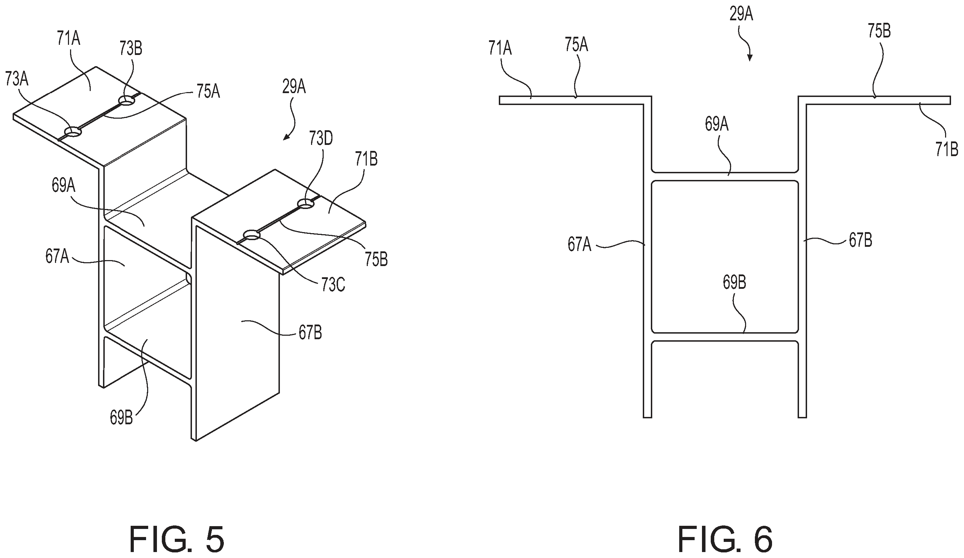

Top bracket 29A is illustrated, *e.g.,* in Figures 5-7. Top brackets 29B-29E are identical to top bracket 29A.

Top bracket 29A includes side walls 67A and 67B, horizontal walls 69A and 69B and top flanges 71A and 71B.

Side walls 67A and 67B are spaced, parallel walls. Horizontal walls 69A and 69B are also spaced, parallel walls that extend between and are perpendicular to side walls 67A and 67B.

Top flanges 71A and 71B extend outwardly from and perpendicularly to side walls 67A and 67B in a common plane. Top flange 71A includes spaced holes 73A and 73B and score line 75A. Similarly, top flange 71B includes spaced holes 73C and 73D and score line 75B. The function of spaced holes 73A-73D is to receive bolts that affix top brackets 29A-29E to top runner 27, as illustrated in Figures 18-20 and explained below. The function of score lines 75A and 75B is guidance with the proper location of holes 73A-73D.

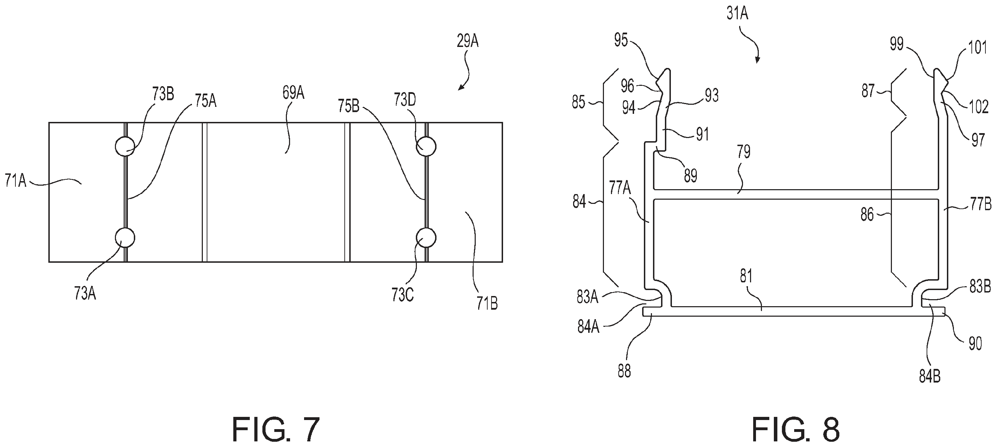

Bottom cover 31A is illustrated, *e.g.,* in Figure 8. Bottom covers 31B-31D are identical to bottom cover 31A. Bottom covers 31A-31D are bottom covers for top runner 27, as illustrated in Figures 2 and 20 and explained below.

Bottom cover 31A includes side walls 77A and 77B, upper horizontal wall 79, lower horizontal wall 81 and recessed portions 83A and 83B, all of which extend the length of bottom cover 31A.

Side wall 77A includes flat section 84 and engaging section 85. Similarly, side wall 77B includes flat section 86 and engaging section 87. Flat sections 84 and 86 are parallel.

Engaging section 85 includes horizontal section 89, vertical section 91 and top section 93. Horizontal section 89 extends inwardly from the top end of flat section 84 of side wall 77A. Vertical section 91 extends upwardly from the innermost end of horizontal section 89. Top section 93 extends upwardly from the top end of vertical section 91. Top section 93 includes slanted section 94, which extends from and is at an angle with vertical section 91, protrusion section 95, which protrudes outwardly, and notch 96 formed between slanted section 94 and protrusion section 96, as illustrated in Figure 8.

The function of engaging section 85, including protrusion 95 and notch 96, is to engage interior flange 55 of top runner 27 to affix bottom covers 31A-31D and top runner 27, as illustrated in Figure 20 and explained below.

Engaging section 87 includes wall section 97, top section 99 and notch 102. Wall section 97 extends upwardly from the top end of flat section 86 at a slight angle to flat section 86. Top section 99 extends upwardly from wall section 97 at a slight angle to wall section 97. Top section 99 includes protrusion 101, which protrudes outwardly, as illustrated in Figure 8. Notch 102 is formed between wall section 97 and protrusion 101.

The function of engaging portion 87, including protrusion 101 and notch 102, is to engage side wall 53 of top runner 27 to affix bottom covers 31A-31D and top runner 27, as illustrated in Figure 20 and explained below.

Upper horizontal wall 79 extends between and is perpendicular to flat sections 84 and 86 of side walls 77A and 77B, respectively.

Lower horizontal wall 81 is parallel to upper horizontal wall 79 and is connected, near its ends, to recessed portions 83A and 83B, as illustrated in Figure 8. Lower horizontal wall 81 includes lips 88 and 90, as explained below.

Recessed portion 83A extends between the lowermost end of flat section 84 of side wall 77A and lower horizontal wall 81. Recessed portion 83A is curved to form recess 84A. Lip 88 of lower horizontal wall 81 is formed to the exterior of the intersection of recessed portion 83A and lower horizontal wall 81.

Similarly, recessed portion 83B extends between the lowermost end of flat section 86 of side wall 77B and lower horizontal wall 81. Recessed portion 83B is curved to form recess 84B. Lip 90 of lower horizontal wall 81 is formed to the exterior of the intersection of recessed portion 83B and lower horizontal wall 81.

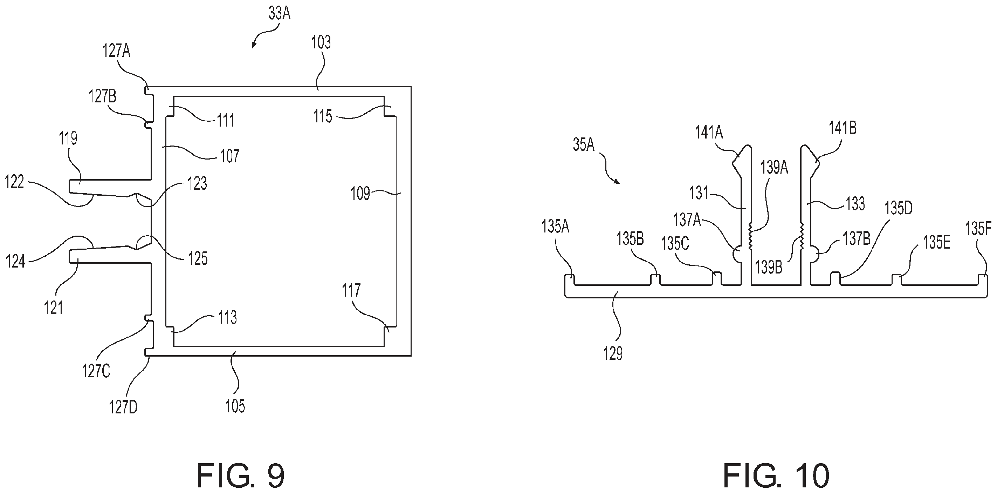

Mullion 33A is illustrated, *e.g.,* in Figure 9. Mullions 33B-33E are identical to mullion 33A.

Mullion 33A includes walls 103, 105, 107 and 109, enlarged portions 111, 113, 115 and 117 and flanges 119 and 121, all of which extend the length of mullion 33A.

Walls 103 and 105 are parallel. Walls 107 and 109 are likewise parallel to each other and perpendicular to walls 103 and wall 105. Each of wall 103 and wall 105 is joined at opposite edges to walls 107 and 109 to form an open-ended elongated beam.

Enlarged portion 111 is at the junction of or corner formed by wall 103 and wall 107 and extends downwardly from wall 103 and inwardly from wall 107. Enlarged portion 115 is at the junction of or corner formed by wall 103 and wall 109 and extends downwardly from wall 103 and inwardly from wall 109. Enlarged portion 113 is at the junction of or corner formed by wall 105 and wall 107 and extends upwardly from wall 105 and inwardly from wall 107. Enlarged portion 117 is at the junction of or corner formed by wall 105 and wall 109 and extends upwardly from wall 105 and inwardly from wall 109.

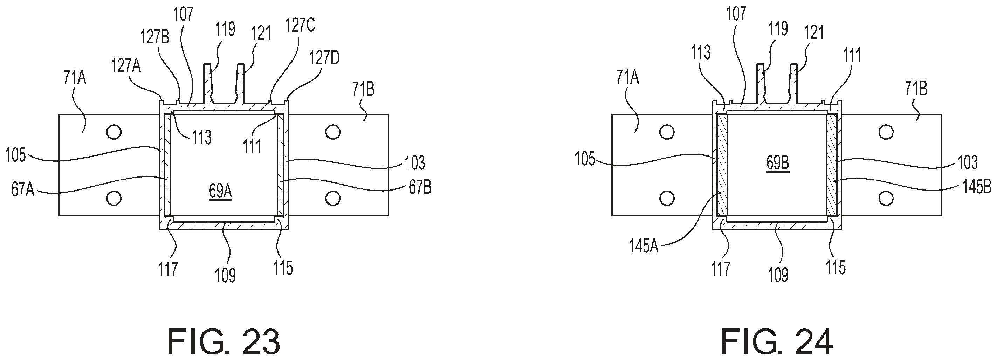

The function of enlarged portions 111, 113, 115 and 117 is to properly position and retain top brackets 29A-E and base brackets 37A-37E within mullions 33A-33E, as illustrated in Figures 23 and 24 and explained below.

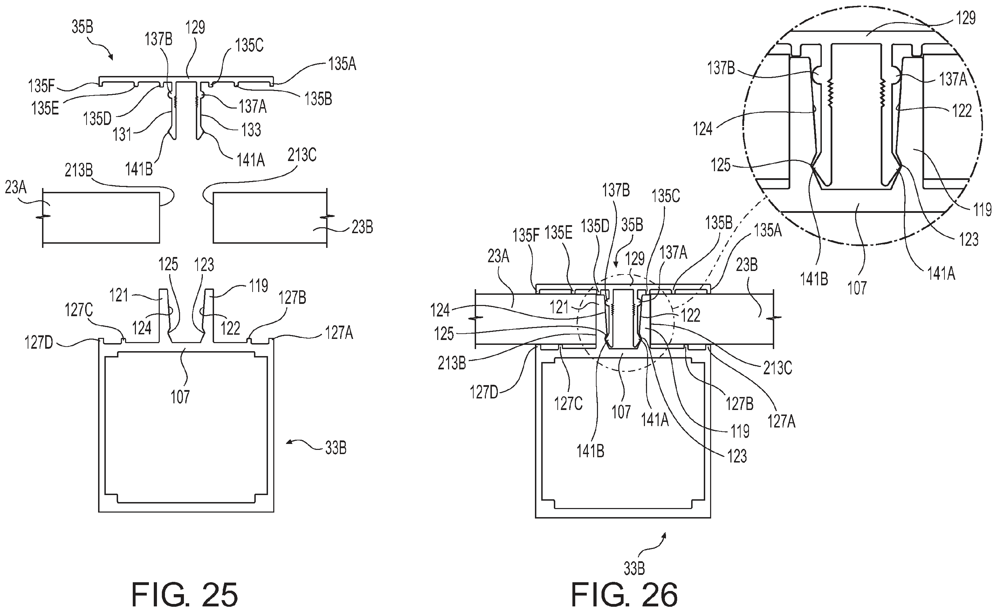

Wall 107 includes nubs 127A-127D that extend outwardly and are spaced along wall 107. The function of nubs 127A-127D is to engage side surfaces of panels to retain the panels between mullions 33A-33E and front caps 35A-35E, as illustrated in Figure 26 and explained below.

Flanges 119 and 121 also extend outwardly from wall 107 in the same direction as nubs 127A-127D and are likewise spaced along wall 107. Flange 119 includes slanted lower surface 122 and notch 123. Similarly, flange 121 includes slanted upper surface 124 and notch 125. As illustrated in Figure 9, slanted lower surface 122 of flange 119 and slanted upper surface 124 of flange 121 face each other. Likewise, notches 123 and 125 face each other.

The function of flanges 119 and flange 121 is to engage flanges of front caps 35A-35E to affix front caps 35A-35F and mullions 33A-33E, as illustrated in Figure 26 and explained below.

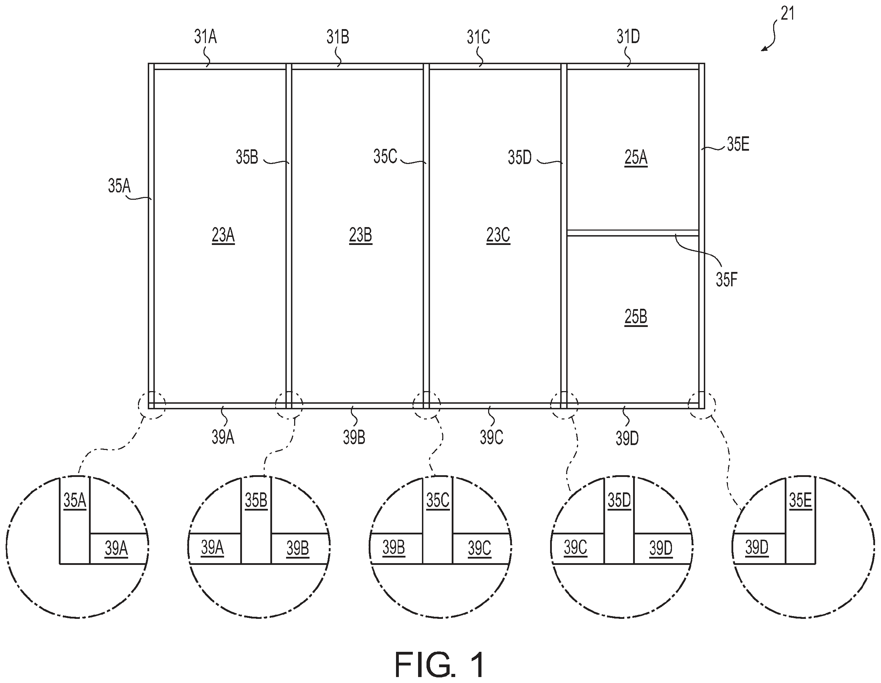

Front cap 35A is illustrated, *e.g.,* in Figure 10. Front caps 35B-35F are identical to front cap 35A, except that front cap 35F is shorter than front caps 35A-35E, as illustrated in Figures 1 and 2.

Front cap 35A includes base wall 129 and flanges 131 and 133, all of which extend the length of front cap 35A. Flanges 131 and 133 extend in the same direction from base wall 129, are spaced along base wall 129 and are parallel.

Base wall 129 includes nubs 135A-135F, which extend in the same direction as flanges 131 and 133 and are spaced along base wall 129. The function of nubs 135A-135F is to engage side surfaces of panels to retain the panels between mullions 33A-33E and front caps 35A-35E, as illustrated in Figure 26 and explained below.

Flange 131 includes bulge portion 137A, threaded portion 139A and protrusion 141A. Similarly, flange 133 includes bulge portion 137B, threaded portion 139B and protrusion 141B.

As illustrated in Figure 10, bulge portions 137A and 137B are in the lower sections of flanges 131 and 133, respectively, threaded portions 139A and 139B are on the opposite side of bulge portions 137A and 137B from base wall 129 and protrusions 141A and 141B are at the free ends of flanges 131 and 133, respectively. Bulge portions 137A and 137B and protrusions 141A and 141B extend outwardly, while threaded portions 139A and 139B are on the interior surfaces of flanges 131 and 133, respectively.

The function of bulge portions 137A and 137B of flanges 131 and 133, respectively, is to engage slanted lower surface 122 of flange 119 of mullions 33A-33E and slanted upper surface 124 of flange 121 of mullions 33A-33E, as illustrated in Figure 26 and explained below.

The function of protrusions 141A and 141B of flanges 131 and 133, respectively, is to engage notch 123 of flange 119 of mullions 33A-33E and notch 125 of flange 121 of mullions 33A-33E to affix mullions 33A-33E and front caps 35A-35E, as illustrated in Figure 26 and explained below. Threaded portions 139A and 139B increase the flexibility of flanges 131 and 133, respectively, as flanges 131 and 133 are inserted between flanges 119 and 121 of mullions 33A-33E, as explained below and illustrated in Figures 25 and 26.

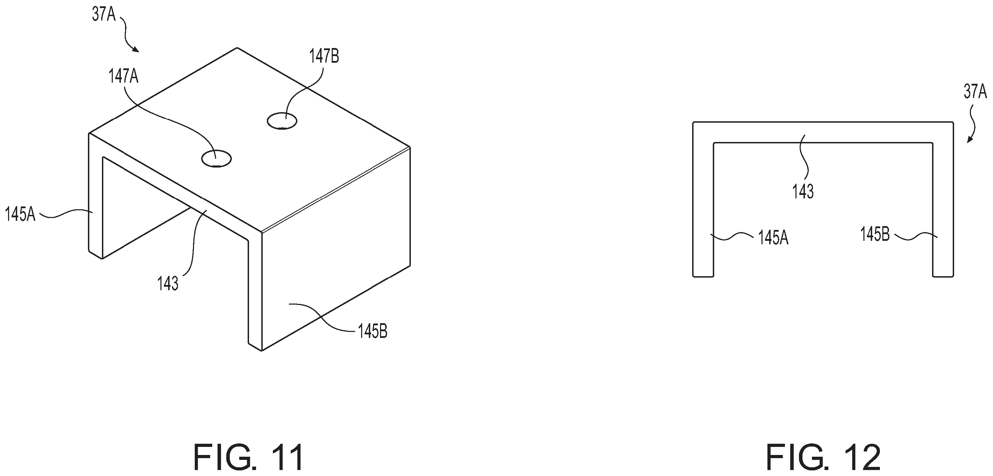

Base bracket 37A is illustrated, *e.g.,* in Figures 11 and 12. Base brackets 37B-37E are identical to base bracket 37A.

Base bracket 37A includes base wall 143 and flanges 145A and 145B. Flanges 145A and 145B extend in parallel and perpendicularly from opposite edges of base wall 143.

Base wall 143 includes spaced holes 147A and 147B. The function of spaced holes 147A and 147B is to receive fasteners to fasten base brackets 37A-37E to a building floor.

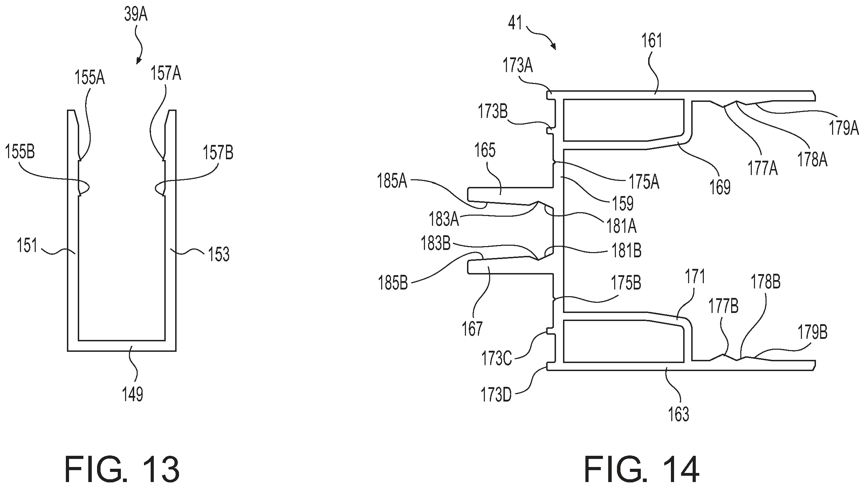

U-channel 39A is illustrated, *e.g.,* in Figure 13. U-channels 39B-39D are identical to U-channel 39A.

U-channel 39A includes base wall 149 and side walls 151 and 153, all of which extend the length of U-channel 39A. Side walls 151 and 153 extend from opposite edges of base wall 149, in parallel and perpendicular to base wall 149, to form a U-shaped cross section.

Side wall 151 includes cleats 155A and 155B that extend inwardly. Similarly, side wall 153 includes cleats 157A and 157B that extend inwardly, toward cleats 155A and 155B. Cleats 155A and 157A are the same distance from base wall 149. Similarly, cleats 155B and 157B are the same distance from base wall 149. Cleats 155A and 157A are between base wall 149 and cleats 155B and 157B, respectively.

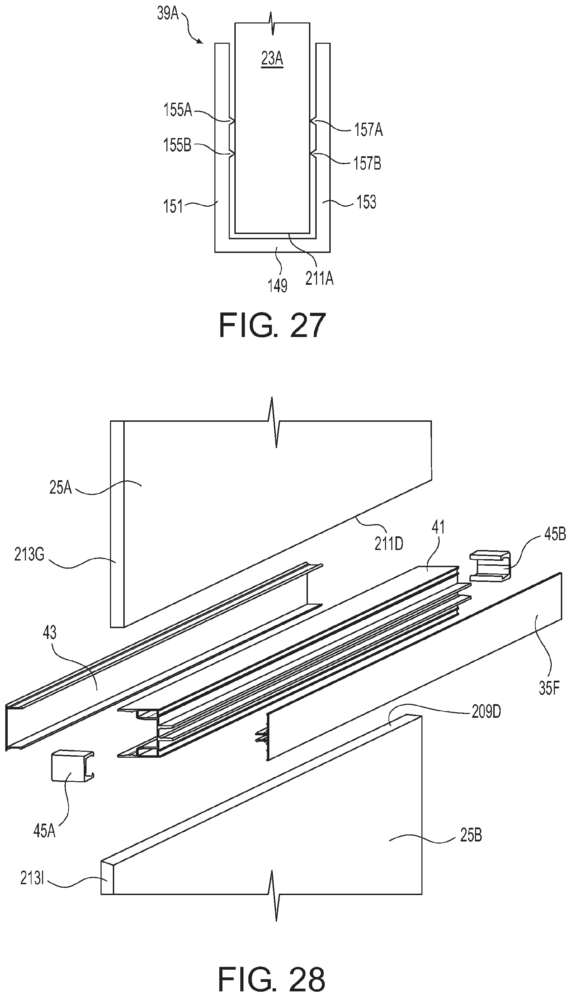

The function of cleats 155A, 155B, 157A and 157B is to engage panels to retain the panels in U-channels 39A-39D, as illustrated in Figure 27 and explained below.

Transom 41 is illustrated, *e.g.,* in Figure 14.

Transom 41 includes back wall 159, side walls 161 and 163, flanges 165 and 167 and interior walls 169 and 171, all of which extend the length of transom 41.

Side walls 161 and 163 extend in the same direction from back wall 159, in parallel and perpendicular to back wall 159. Flanges 165 and 167 extend from back wall 159 in the opposite direction from side walls 161 and 163, also in parallel and perpendicular to back wall 159. Interior wall 169 extends inwardly between back wall 159 and side wall 161 to form a closed corner, in cross section, at the junction of back wall 159 and side wall 161. Similarly, interior wall 171 extends inwardly between back wall 159 and side wall 163 to form a closed corner, in cross section, at the junction of back wall 159 and side wall 163.

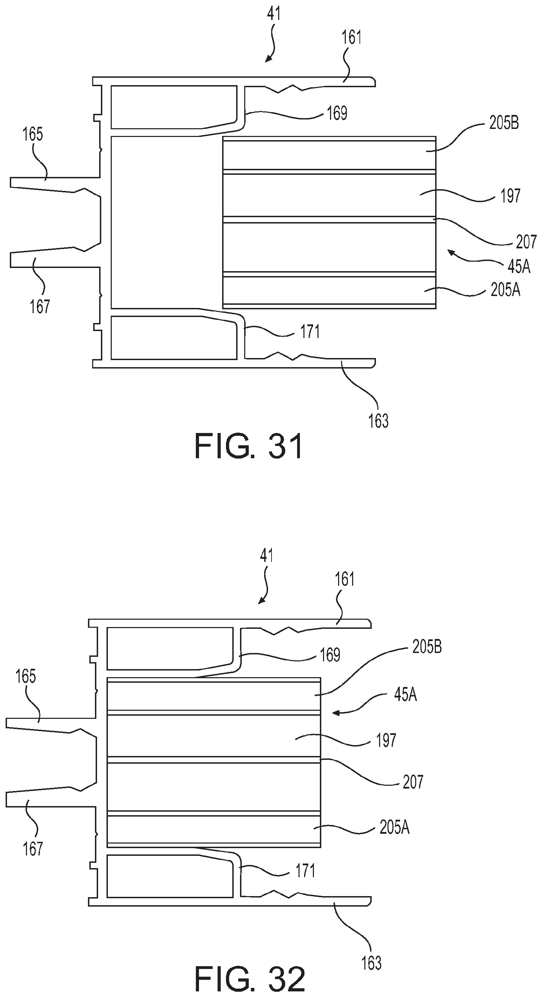

The function of interior walls 169 and 171 is to guide and retain transom cleats 45A and 45B in transom 41, as explained below and illustrated in Figures 31 and 32.

Back wall 159 includes nubs 173A-173D, which are spaced along back wall 159 and extend in the same direction as flanges 165 and 167, and score lines 175A and 175B, which run in the longitudinal direction of back wall 159.

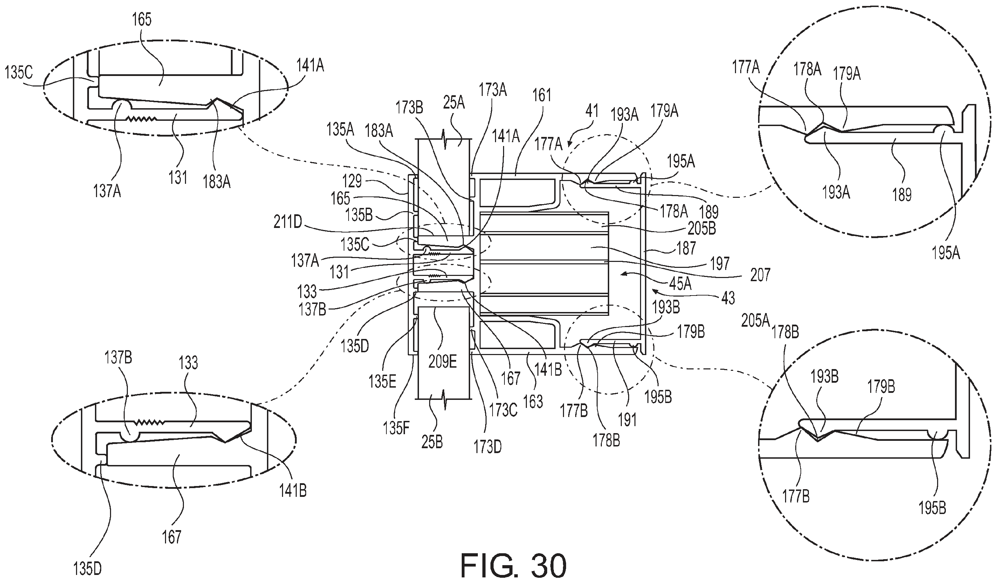

The function of nubs 173A-173D is to engage side surfaces of panels, as illustrated in Figure 30 and explained below.

The function of score lines 175A and 175B is to provide a reference line for screw holes that align with loops 205A and 205B of transom cleats 45A and 45B, discussed below. That is, a hole drilled along score lines 175A and 175B will align with one of loops 205A and 205B.

Side wall 161 includes protrusions 177A and 179A, which protrude inwardly, and notch 178A between protrusions 177A and 179A. Similarly, side wall 163 includes protrusions 177B and 179B, which also protrude inwardly toward protrusions 177A and 179A, and notch 178B between protrusions 177B and 179B. Protrusions 177A and 179A have the same height. Likewise, protrusions 177B and 179B have the same height. The height of protrusions 177A and 179A is greater than the height of protrusions 179A and 179B. Protrusions 177A and 179A are between base wall 159 and protrusions 177B and 179B, respectively.

The function of protrusions 177A, 177B, 179A and 179B and notches 178A and 178B is to engage side walls of transom back cap 43 to affix transom 41 and transom back cap 43, as illustrated in Figure 30 and explained below.

Flange 165 includes inner slanted surface 181A, notch 183A and outer slanted surface 185A, all on the interior surface of finger 165. Notch 183A is formed by the junction of inner slanted surface 181A and outer slanted surface 185A.

Similarly, flange 167 includes inner slanted surface 181B, notch 185B and outer slanted surface 185B, all on the interior surface of finger 167. Notch 183B is formed by the junction of inner slanted surface 181B and outer slanted surface 185B.

Inner slanted surface 181B faces inner slanted surface 181A, notch 183B faces notch 183A and outer slanted surface 185B faces outer slanted surface 185A.

The function of flanges 165 and 167 is to engage flanges 131 and 133 of front cap 35F to affix transom 41 and front cap 35F, as illustrated in Figure 30 and explained below.

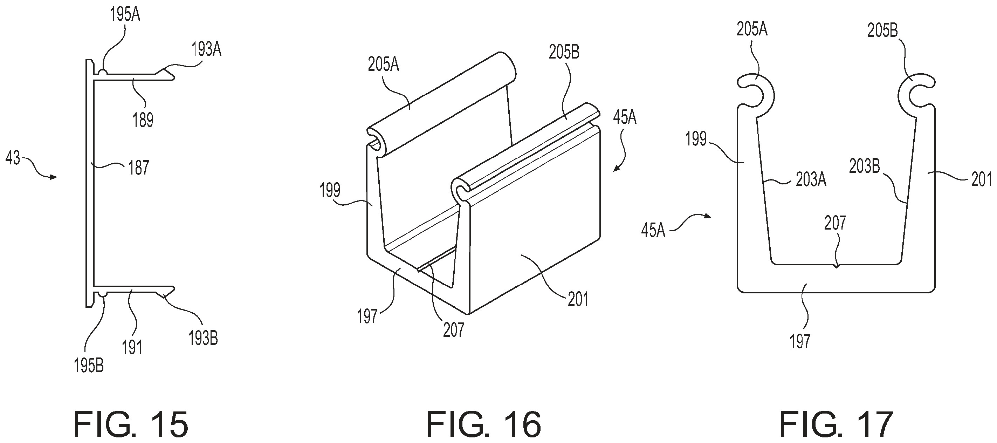

Transom back cap 43 is illustrated, *e.g.,* in Figure 15.

Transom back cap 43 includes back wall 187 and side walls 189 and 191. Side walls 189 and 191 extend from back wall 187 in the same direction, parallel to each other and perpendicular to back wall 187.

Side wall 189 includes protrusions 193A and 195A, which are spaced along side wall 189 and extend away from side wall 191. Similarly, side wall 191 includes protrusions 193B and 195B, which are spaced along side wall 191 and extend away from side wall 189.

Protrusions 193A and 193B are identical, and protrusions 195A and 195B are identical.

The function of protrusions 193A, 193B, 195A and 195B is to engage flanges 165 and 167 of transom 41 to affix transom 41 and transom back cap 43, as illustrated in Figure 30 and explained below.

Transom cleat 45A is illustrated, *e.g.,* in Figures 16 and 17. Transom cleat 45B is identical to transom cleat 45A.

Back wall 197 includes score line 207 that is on the same side of back wall 197 as side walls 199 and 201 and extends the length of back wall 197. Score line 207 functions as a reference line for the drilling of holes in back wall 197.

Side wall 199 includes slanted interior surface 203A and loop 205A. Similarly, side wall 201 includes slanted interior surface 203B and loop 205B. Slanted surfaces 203A and 203B start at back wall 197 and slant outwardly, away from each other. Loops 205A and 205B are at the ends of slanted surfaces 203A and 203B that are opposite back wall 197 and have openings that face outwardly.

The inclusion of slanted surfaces 203A and 203B is to increase the rigidity of transom cleat 45A. Loops 205A and 205B function as screw ports.

Partition wall assembly 21 is assembled as follows.

Starting with the assembly of panels 23A-23C and 25A, top runner 27, top brackets 29A-29E and bottom covers 31A-31D, the assembly of panel 23A, top runner 27, top bracket 29A and bottom cover 31A is illustrated in Figures 18-20 and explained next.

First, top bracket 29A is attached to top runner 27 by bolts 47 that pass through holes 73A and 73B in top flange 71A of top bracket 29A and holes 73C and 73D in top flange 71B of top bracket 29A and threadedly engage the opposing threaded surfaces of threaded interior walls 57A and 57B and the opposing threaded surfaces of threaded interior walls 57C and 57D.

Next, the top edge portion of panel 23A that includes top edge 209A is positioned between nubs 65A and 65B of side wall 51 of top runner 27 and side wall 77A of bottom cover 31A, as shown in Figure 19. Nubs 65A and 65B and side wall 77A function to properly position panel 23A relative to top runner 27 and bottom cover 31A during assembly and when partition wall assembly 21 is fully assembled.

Then, bottom cover 31A is slid upward alongside panel 23A toward top runner 27 until bottom cover 31A "snaps in place" relative to top runner 27, as shown in Figures 19 and 20.

Specifically, due to the fact that the portions of side walls 77A and 77B of bottom cover 31A above upper horizontal wall 79 are cantilevers, engaging sections 85 and 87 of side walls 77A and 77B, respectively, flex inwardly as protrusion 95 of engaging portion 85 "rides over" raised surface 59 of interior flange 55 of top runner 27 and protrusion 101 of engaging portion 87 "rides over" raised surface 63 of side wall 53 of top runner 27. As the movement of bottom cover 31A relative to top runner 27 continues, bottom cover 31A is "snapped" in place, in its final position relative to top runner 27, when raised surface 59 of interior flange 55 of top runner 27 is received in notch 96 of engaging section 85 and raised surface 63 of side wall 53 of top runner 27 is received in notch 102 of engaging portion 87, as illustrated in Figure 20.

In the final position of bottom cover 31A relative to top runner 27, the lowermost end of interior flange 55 of top runner 27 abuts a "shelf" created by horizontal section 89 of engaging section 85 of side wall 77A of bottom cover 31A to maintain, in part, the desired relative position of bottom cover 31A and top runner 27.

Also, in the final position of bottom cover 31A relative to top runner 27, (1) there is a small gap between lip 88 of lower horizontal wall 81 of bottom cover 31A and side wall 53 of top runner 27 to allow a tool, such as a screw driver, to be inserted into the gap to facilitate the removal of bottom cover 31A from top runner 27 and (2) lip 90 of lower horizontal wall 81 forms a tight fit with panel 23A.

Panels 23B, 23C and 25A, top brackets 29B-29E and bottom covers 31B-31D are similarly assembled with top runner 27. That is, top brackets 29B-29E are attached to top runner 27 the same way that top bracket 29A is attached to top runner 27. Likewise, panels 23B, 23C and 25A, bottom covers 31B-31D and top runner 27 are assembled the same way that panel 23A, bottom cover 31A and top runner 27 are assembled, as explained above.

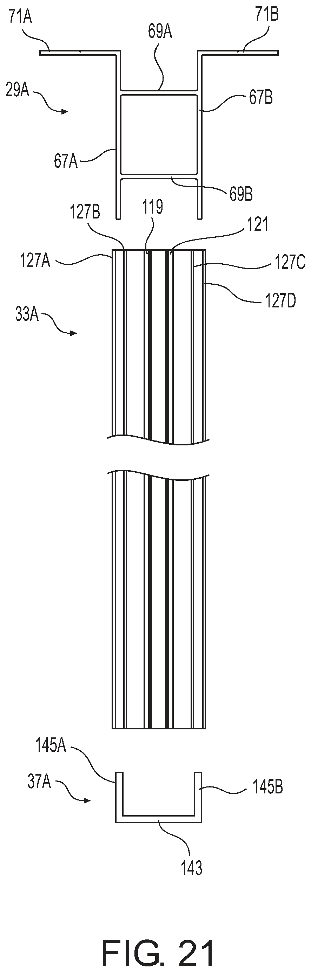

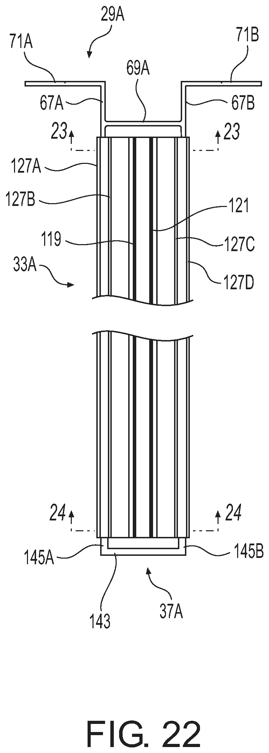

Turning to the assemblies of (1) top bracket 29A, mullion 33A and base bracket 37A, (2) top bracket 29B, mullion 33B and base bracket 37B, (3) top bracket 29C, mullion 33C and base bracket 37C, (4) top bracket 29D, mullion 33D and base bracket 37D and (5) top bracket 29E, mullion 33E and base bracket 37E, the assembly of top bracket 29A, mullion 33A and base bracket 37A is illustrated in Figures 21-24.

Specifically, top bracket 29A is slid into the top of mullion 33A. Side walls 67A and 67B of top bracket 29A and walls 103, 105, 107 and 109 and enlarged portions 111, 113, 115 and 117 of mullion 33A are of a size and shape such that there is a friction fit between side wall 67A of top bracket 29A and wall 105 and enlarged portions 113 and 117 of mullion 33A and side wall 67B of top bracket 29A and wall 103 and enlarged portions 111 and 115 of mullion 33A, as illustrated in Figure 23. In particular, the outer surfaces of side walls 67A and 67B of top bracket 29A abut the inner surfaces of walls 105 and 103, respectively, of mullion 33A, the edges of side wall 67A of top bracket 29A abut enlarged surfaces 113 and 117 of mullion 33A and the edges of side wall 67B of top bracket 29A abut enlarged surfaces 111 and 115.

Similarly, base bracket 37A is slid into the bottom of mullion 33A. Side walls 145A and 145B of base bracket 37A and walls 103, 105, 107 and 109 and enlarged portions 111, 113, 115 and 117 of mullion 33A are of a size and shape such that there is a friction fit between side wall 145A of base bracket 37A and wall 105 and enlarged portions 113 and 117 of mullion 33A and side wall 145B of base bracket 37A and wall 103 and enlarged portions 111 and 115 of mullion 33A, as illustrated in Figure 24. Specifically, the outer surfaces of side walls 145A and 145B of base bracket 37A abut the inner surfaces of inner surfaces of walls 103 and 105, respectively, of mullion 33A, the edges of side wall 145A of base bracket 37A abut enlarged portions 113 and 117 of mullion 33A and the edges of side wall 145B abut enlarged portions 111 and 115 of mullion 33A.

The assemblies of (1) top bracket 29B, mullion 33B and base bracket 37B, (2) top bracket 29C, mullion 33C and base bracket 37C, (3) top bracket 29D, mullion 33D and base bracket 33D and (4) top bracket 29E, mullion 33E and base bracket 37E are the same as the assembly of top bracket 29A, mullion 33A and base bracket 37A explained above and illustrated in Figures 21-24.

Addressing next the assemblies of (1) mullion 33A, front cap 35A and panel 23A, (2) mullion 33B, front cap 35B and panels 23A and 23B, (3) mullion 33C, front cap 35C and panels 23B and 23C, (4) mullion 33D, front cap 35D and panels 23C, 25A and 25B and (5) mullion 33E, front cap 35E and panels 25A and 25B, the assembling of mullion 33B, front cap 35B and panels 23A and 23B is illustrated in Figures 25 and 26 and explained next.

As illustrated in Figure 25, mullion 33B and front cap 35B are positioned such that flanges 119 and 121 of mullion 33B face flanges 131 and 133 of front cap 35B. Edge portions of panels 23A and 23B that include side edge 213B of panel 23A and side edge 213C of panel 23B are positioned between mullion 33B and front cap 35B, with panels 23A and 23B on opposite sides of flanges 119 and 121 of mullion 33B and flanges 131 and 133 of front cap 35B.

Mullion 33B and front cap 35B are then moved together and brought into engagement. Specifically, flanges 131 and 133 of front cap 35B are received between and engage flanges 119 and 121 of front cap. More specifically, as mullion 33B and front cap 35B are moved together, protrusion 141A of flange 133 of front cap 35B slides along slanted lower surface 122 of flange 119 of mullion 33B and protrusion 141B of flange 131 of front cap 35B slides along slanted upper surface of 124 of flange 121 of mullion 33B until protrusion 141A of flange 133 of front cap 35B engages notch 123 of flange 119 of mullion 33B and protrusion 141B of flange 131 of front cap 35B engages notch 125 of flange 121 of mullion 33B. When that engagement occurs, bulge portion 137A of flange 133 of front cap 35B abuts the inner surface of flange 119 of mullion 33B and bulge portion 137B of flange 131 of front cap 35B abuts the inner surface of flange 121 of mullion 33B.

When mullion 33B and front cap 35B are in that position, side edge 231B of panel 23A abuts the outer surface of flange 121, opposing face surfaces of panel 23A abut (1) nubs 127C and 127D of wall 107 of mullion 33B and (2) nubs 135E and 135F of base wall 129 of front cap 35B, side edge 213C of panel 23B abuts the outer surface of flange 119, opposing face surfaces of panel 23B abut (1) nubs 127A and 127B of wall 107 of mullion 33B and (2) nubs 138A and 138B of base wall 129 of front cap 35B, the free end of flange 121 of mullion 33B abuts nub 135D of base wall 129 of front cap 35B and the free end of flange 119 abuts nub 135C of base wall 129 of front cap 35B.

The assemblies of (1) mullion 35A, front cap 35A and panel 23A, (2) mullion 33C, front cap 35C and panels 23B and 23C, (3) mullion 33D, front cap 35D and panels 23C, 25A and 25B and (4) mullion 35E, front cap 35E and panels 25A and 25B are the same as the assembly of mullion 35B, front cap 35B and panels 23A and 23B, except that, (1) in the assembly of mullion 35A, front cap 35A and panel 23A, there is no panel between wall 107 of mullion 35A and base wall 129 of front cap 35A on the side of flanges 119 and 121 of mullion 33A and flanges 131 and 133 of front cap 35A opposite to panel 23A and (2) in the assembly of mullion 33E, front cap 35E and panels 25A and 25B, there is no panel between wall 107 of mullion 35E and base wall 129 of front cap 35E on the side of flanges 119 and 121 of mullion 33E and flanges 131 and 133 of front cap 35E opposite panels 25A and 25B.

The assembly of U-channels 39A-39D and 23A-23C and panel 25B is explained next.

The assembly of U-channel 39A to the lower edge portion of panel 23A that includes lower edge 211A is illustrated in Figure 27. Specifically, U-channel 39A is slid onto the lower edge portion of panel 23A in the direction perpendicular to Figure 27. Cleats 155A and 155B of side wall 151 of U-channel 39A engage one side wall of panel 23A and cleats 157A and 157B of side wall 153 of U-channel 39A engage the opposite side wall of panel 23A to retain U-channel 39A on the lower edge portion of panel 23A.

U-channels 39B-39D are similarly attached to the lower edge portions of panels 23B, 23C and 25B, respectively.

Further, the assembly of transom 41, transom back cap 43, front cap 35F, transom cleats 45A and 45B and panels 25A and 25B is explained below and illustrated in Figures 28-32.

First, transom 41 and transom cleats 45A and 45B are assembled as illustrated in Figures 31 and 32, with transom cleats 45A and 45B being between interior walls 169 and 171 of transom 41. Screw holes can be drilled along score lines 175A and 175B of back wall 159 of transom 41. Screws can be inserted through those screw holes and received in loops 205A and 205B of transom cleats 45A and 45B.

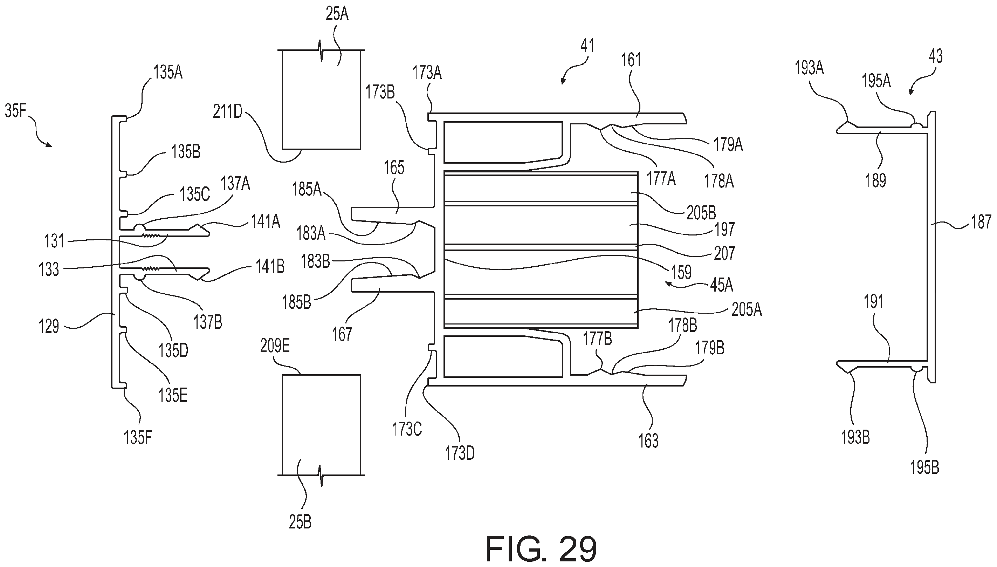

Second, front cap 35F are positioned as shown in Figure 29, with flanges 131 and 133 of front cap 35F facing flanges 165 and 167 of transom 41. The bottom edge portion of panel 25A that includes bottom edge 211D and the top edge portion of panel 25B that includes top edge 209E are positioned between base wall 129 of front cap 35F and back wall 159 of transom 41, on opposite sides of flanges 131 and 133 of front cap 35F and flanges 165 and 167 of transom 41.

Next, front cap 35F and transom 41 are moved together until flanges 131 and 133 of front cap 35F are between and engage flanges 165 and 167 of transom 41.

During this movement, protrusion 141A of flange 131 of front cap 35F slides along outer slanted wall 185A of flange 165 of transom 41 and protrusion 141B of flange 133 of front cap 35F slides along outer slanted wall 185B of flange 167 of transom 41, causing flanges 131 and 133 to flex inwardly, toward each other.

That movement of front cap 35F and transom 41 is continued until protrusion 141A of flange 131 of front cap 35F "snaps" into notch 183A of flange 165 of transom 41 and protrusion 141B of flange 133 of front cap 35F "snaps" into notch 183B of flange 167 of transom 41.

In the final relative position of front cap 35F and transom 41, the leading edge of the free end of flange 165 of transom 41 abuts nub 135C of base wall 129 of front cap 35F and the leading edge of the free end of flange 167 abuts nub 135D of base wall 129 of front cap 35F. Also, panel 25A is held between nubs 135A and 135B of base wall 129 of front cap 35F and nubs 173A and 173B of back wall 159 of transom 41. Similarly, panel 25B is held between nubs 135E and 135F of base wall 129 of front cap 35F and nubs 173C and 173D of back wall 159 of transom 41, as illustrated in Figure 30.

Also, when front cap 35F and transom 41 are in their final relative position, bulge portion 137A of flange 131 of front cap 35F engages outer slanted wall 185A of flange 165 and bulge portion 137B of flange 133 of front cap 35F engages outer slanted wall 185B of flange 167 of transom 41.

Next, transom back cap 43 is attached to transom 41 by inserting side walls 189 and 191 of transom back cap 43 between side walls 161 and 163 of transom 41.

Specifically, transom 41 and transom back cap 43 are initially positioned as shown in Figure 29. Transom back cap 43 is moved toward transom 41.

During that movement, protrusion 193A of side wall 189 of transom back cap 43 engages and slides along the interior surface of side wall 161 of transom 41. When protrusion 193A engages protrusion 179A of side wall 161 of transom 41, protrusion 193A "rides over" protrusion 179A, flexing side wall 189 inwardly. After protusion 193A of side wall 189 of transom back cap passes over protrusion 179A, protrusion 193A snaps into notch 178A of side wall 161 of transom 41. Protrusion 195A of side wall 189 of transom back cap 43 engages the interior surface of side wall 161 of transom 41, as illustrated in Figure 30.

Similarly, during that movement, protrusion 193B of side wall 191 of transom back cap 43 engages and slides along the interior surface of side wall 163 of transom 41. When protrusion 193B engages protrusion 179B of side wall 163 of transom 41, protrusion 193B "rides over" protrusion 179B, flexing side wall 191 inwardly. After protrusion 193B of side wall 163 of transom back cap 43 passes over protrusion 179B, protrusion 193B snaps into notch 178B of side wall 163 of transom 41. Protrusion 195B of side wall 191 of transom back cap 43 engages the interior surface of side wall 193 of transom 41, as illustrated in Figure 30.

The snap fit of transom back cap 43 to transom 41 allows transom back cap 43 to be relatively easy to remove from transom 41.

Finally, transom cleat 45A can be attached to mullion 33D by a screw or screws along its score line 207. Likewise, transom cleat 45B can be attached to mullion 33E by a screw or screws along its score line 207.

The function of the transom assembly is to provide a horizontal beam for aesthetic purposes and/or to allow sections to be omitted or removed from the partition wall assembly for louvres, penetrations, etc.

While this embodiment of a partition wall assembly of this invention includes panels 23A-23C, 25A and 25B, top runner 27, top brackets 29A-29E, bottom covers 31A-31D, mullions 33A-33E, front caps 35A-35F, base brackets 37A-37E, U-channels 39A-39D, transom 41, transom back cap 43 and transom cleats 45A and 45B as described above and illustrated in the figures, other embodiments of this invention may have other structural members as long as the other structural members can perform the functions of panels 23A-23C, 25A and 25B, top runner 27, top brackets 29A-29E, bottom covers 31A-31D, mullions 33A-33E, front caps 35A-35F, base brackets 37A-37E, U-channels 39A-39D, transom 41, transom back cap 43 and/or transom cleats 45A and 45B. For example, brackets other than top brackets 29A-29E can be employed to attach mullions 33A-33E to top runner 27, as long as those brackets sufficiently attach the mullions to the top runner.

Also, the number of panels, mullions, top brackets, etc. can vary depending on the desired length and configuration of the partition wall assembly.

As further examples of variations of the partition wall assemblies of this invention, the number of transom assemblies may vary, again depending on the desired configuration. There can also be multiple transom assemblies arranged vertically between a pair of mullions. On the other hand, some embodiments of this invention may have no transom assemblies.

What is described and illustrated herein are preferred embodiments of the invention with some variations. The terms, figures and figures are for illustration only, and are not meant as limitations of the invention. Those skilled in the art will recognize that many variations are possible within the scope of the invention, as defined by the following claims.

## Claims

1. A partition wall assembly comprising:
a first set of panels including at least two panels, each of the at least two panels of the first set of panels having a top edge portion, a bottom edge portion and two side edge portions;
a top runner;
a bottom cover for the top runner;
at least two mullions that are spaced and parallel, each of the at least two mullions having a top end and a bottom end;
at least two front caps;
at least two top brackets that are spaced; and
at least two bottom brackets that are spaced; wherein:
each of the at least two top brackets is attached to the top runner;
the top end of the each of the at least two mullions is connected to one of the at least two top brackets;
the bottom cover for the top runner is attached to the top runner;
the top edge portion of the each of the at least two panels of the first set of panels is directly engaged and retained by and between the top runner and the bottom cover for the top runner;
each of the at least two front caps is attached to one of the at least two mullions;
the side edge portions of the each of the at least two panels of the first set of panels are retained by and between one of the at least two mullions and one of the at least two front caps;
the bottom end of the each of the two mullions is connected to one of the at least two bottom brackets; and
the top runner and the bottom cover for the top runner are perpendicular to the at least two mullions and the at least two front caps.

2. The partition wall assembly according to claim 1, wherein:
the top runner has (a) first and second outermost side walls extending in parallel in a same direction from a base wall of the top runner and (b) an interior wall that (i) extends in the same direction from the base wall, (ii) is parallel to the first and second outermost side walls and (iii) between the first and second outermost side walls along the base wall;
the bottom cover for the top runner is directly connected to the first outermost side wall and the interior wall; and
the upper edge portion of the each of the at least two panels of the first set of panels is directly engaged and retained by the second outermost side wall and the bottom cover for the top runner.

3. The partition wall assembly according to claim 2, wherein the bottom cover for the top runner is connected to the first outermost wall and the interior wall by a snap fit.

4. The partition wall assembly according to claim 3, wherein the each of the at least two top brackets is between the first outermost wall and the interior wall.

5. The partition wall assembly according to claim 4, wherein:
the bottom cover has two spaced and parallel side walls; and
the first outermost side wall and the interior wall have bulges that engage notches in the two spaced and parallel side walls of the bottom cover.

6. The partition wall assembly according to claim 1, wherein:
the each of the at least two mullions has a first set of flanges extending in parallel from an exterior surface of the each of the at least two mullions;
the each of the at least two front caps includes a second set of flanges extending in parallel from a surface of the each of the at least two front caps; and
the second set of flanges is received in and engages the first set of flanges.

7. The partition wall assembly according to claim 1, further comprising:
a transom perpendicular to the at least two mullions and the at least two front caps;
a transom front cap perpendicular to the at least two mullions and the at least two front caps; and
a second set of at least two panels having edge portions; wherein:
the transom front cap is attached to the transom; and
the edge portions of the second set of at least two panels is engaged by and received between the transom and the transom front cap.

8. The partition wall assembly according to claim 7, wherein the transom and transom front cap are between the top end and the bottom end of two of the at least two mullions.

9. The partition wall assembly according to claim 1, further comprising a bottom channel member that receives and engages the bottom edge portion of the at least two panels of the first set of panels.
